# EUROPEAN PATENT SPECIFICATION

(11) **EP 4 166 981 B1**
(45) Date of publication and mention of the grant of the patent: **14.05.2025**
(21) Application number: 21825409.2
(22) Date of filing: 09.06.2021
(51) Int. Cl.: G01S 13/08, G01S 13/58, G01S 13/88, G01J 5/00, G06T 7/50, G06T 7/73, G01S 13/86

(54) **OBJECT DETECTION METHOD AND CAMERA DEVICE**
OBJEKTERKENNUNGSVERFAHREN UND KAMERAVORRICHTUNG
PROCÉDÉ DE DÉTECTION D'OBJET ET DISPOSITIF DE CAMÉRA

(30) Priority: 15.06.2020 CN 202010544549
(43) Date of publication of application: 19.04.2023
(73) Proprietor: Hangzhou Hikmicro Sensing Technology Co., Ltd., Hangzhou Zhejiang 311501 (CN)
(72) Inventor: LIN, Kerong, Hangzhou, Zhejiang 311501 (CN)
(74) Representative: Vogelbruch, Keang
(86) International application number: PCT/CN2021/099211
(87) International publication number: WO 2021/254233

(56) References cited:
- WO-A1-2017/029886
- CN-A- 108 845 574
- CN-A- 111 045 000
- CN-A- 111 736 140
- JP-A- 2007 255 978
- JP-A- 2016 009 474
- KR-B1- 102 092 552
- US-A1- 2018 089 501
- US-A1- 2020 174 112

## Description

### TECHNICAL FIELD

The present application relates to monitoring field, and in particular to a method of detecting an object and a camera device.

### BACKGROUND

Object detection, also called perimeter detection, refers to a technology for monitoring whether a preset specified object appears in a monitoring region. The perimeter detection technology is the first protection line for an entire security protection system and thus is of great significance for the entire security protection system.

But, the perimeter detection method is liable to influence of weather, blocking articles and the like, leading to a low accuracy of a perimeter detection result. US2020174112A1 discloses a sensor fusion system for an autonomous vehicle and/or advanced driver assistance systems. KR102092552B1 discloses an intelligent all-weather image display camera system. US20180089501A1 discloses a method for estimating a distance of an object detected by an image sensor.

### SUMMARY

In view of this, the present application provides a method of detecting an object and a camera device, so as to improve the accuracy of the object detection.

According to a first aspect of the present application, there is provided a method of detecting an object, which is applied to a camera device and includes:
based on a radar detection signal for detecting a to-be-detected object, determining spatial position information of the to-be-detected object, where the spatial position information at least includes: distance information of the to-be-detected object relative to the camera device and speed information of the to-be-detected object;
in response to that the speed information satisfies a preset speed requirement, based on the distance information, determining a calibration size range corresponding to the to-be-detected object, and based on a collected image containing the to-be-detected object, determining an actual size of the to-be-detected object in the image, where the calibration size range is used to represent, when the to-be-detected object is a specified object, a size range of the specified objected in the image;
based on the actual size and the calibration size range, determining whether the to-be-detected object is the specified object,

based on the distance information, determining the calibration size range corresponding to the to-be-detected object includes:
inputting the distance information to a preset size prediction model to obtain a corresponding calibration size, where the size prediction model is pre-stored in the camera device and represents a correspondence between distance information from the to-be-detected object to the camera device and calibration sizes;
based on the calibration size and a preset size error, determining the calibration size range.

Optionally, based on the actual size and the calibration size range, determining whether the to-be-detected object is the specified object includes:
in response to that the actual size is within the calibration size range, determining the to-be-detected object is the specified object;
in response to that the actual size is not within the calibration size range, determining the to-be-detected object is not the specified object.

Optionally, the image is a thermal image.

Optionally, based on the collected image containing the to-be-detected object, determining the actual size of the to-be-detected object in the image further includes: based on the thermal image, determining current temperature information of the to-be-detected object;

based on the actual size and the calibration size range, determining whether the to-be-detected object is the specified object includes:
in response to that the actual size is within the calibration size range and the current temperature information satisfies a preset temperature requirement, determining the to-be-detected object is the specified object;
in response to that the actual size is not within the calibration size range and/or the current temperature information does not satisfy the preset temperature requirement, determining the to-be-detected object is not the specified object.

Optionally, the image is a visible light image.

Optionally, the image includes a thermal image and a visible light image;
based on the collected image containing the to-be-detected object, determining the actual size of the to-be-detected object in the image includes:
determining a first actual size of the to-be-detected object from the thermal image;
determining a second actual size of the to-be-detected object from the visible light image;
based on the collected image containing the to-be-detected object, determining the actual size of the to-be-detected object in the image further includes: based on the thermal image, determining current temperature information of the to-be-detected object;
based on the actual size and the calibration size range, determining whether the to-be-detected object is the specified object includes:
   in response to that the first actual size and the second actual size both are within the calibration size range, and the current temperature information satisfies a preset temperature requirement, determining the to-be-detected object is the specified object;
   in response to that the first actual size is not within the calibration size range, and/or the second actual size is not within the calibration size range, and/or the current temperature information does not satisfy the preset temperature requirement, determining the to-be-detected object is not the specified object.

According to a second aspect of the present application, there is provided a camera device, including:
a radar module, configured to send a radar detection signal for detecting a to-be-detected objet and receive a reflected radar detection signal;
an image module, configured to collect an image containing the to-be-detected object; and
a processor, configured to obtain spatial position information of the to-be-detected object; where the spatial position information is determined based on the radar detection signal for detecting the to-be-detected object, and the spatial position information at least includes: distance information of the to-be-detected object relative to the camera device and speed information of the to-be-detected object; in response to that the speed information satisfies a preset speed requirement, based on the distance information, determine a calibration size range of the to-be-detected object, and obtain an actual size of the to-be-detected object in the image, where the actual size is determined based on the collected image containing the to-be-detected object; and based on the actual size and the calibration size range, determine whether the to-be-detected object is a specified object;
where the calibration size range is used to represent, when the to-be-detected object is the specified object, a size range of the specified objected in the image,
   the processor, when determining the calibration size range of the to-be-detected object based on the distance information, is configured to input the distance information to a preset size prediction model to obtain a corresponding calibration size; and based on the calibration size and a preset size error, determine the calibration size range; where the size prediction model is pre-stored in the camera device and represents a correspondence between distance information from the to-be-detected object to the camera device and calibration sizes.

Optionally, the processor, when determining whether the to-be-detected object is the specified object based on the actual size and the calibration size range, is configured to, in response to that the actual size is within the calibration size range, determine the to-be-detected object is the specified object; in response to that the actual size is not within the calibration size range, determine the to-be-detected object is not the specified object.

Optionally, the image module is a thermal imaging module, and the image is a thermal image.
the processor is further configured to obtain current temperature information of the to-be-detected object; where the current temperature information is determined based on the thermal image;
the processor, when determining whether the to-be-detected object is the specified object based on the actual size and the calibration size range, is configured to, in response to that the actual size is within the calibration size range and the current temperature information satisfies a preset temperature requirement, determine the to-be-detected object is the specified object; in response to that the actual size is not within the calibration size range, and/or the current temperature information does not satisfy the preset temperature requirement, determine the to-be-detected object is not the specified object.

Optionally, the image module is a visible light module and the image is a visible light image.

Optionally, the image module includes a thermal imaging module and a visible light module; and the image includes a thermal image and a visible light image;
the processor, when obtaining the actual size of the to-be-detected object in the image, is configured to obtain a first actual size of the to-be-detected object and a second actual size of the to-be-detected object; where the first actual size is determined based on the thermal image; and the second actual size is determined based on the visible light image;
the processor is further configured to determine current temperature information of the to-be-detected object based on the thermal image;
the processor, when determining whether the to-be-detected object is the specified object based on the actual size and the calibration size range, is configured to, in response to that the first actual size and the second actual size both are within the calibration size range and the current temperature information satisfies a preset temperature requirement, determine the to-be-detected object is the specified object; in response to that the first actual size is not within the calibration size range, and/or the second actual size is not within the calibration size range, and/or the current temperature information does not satisfy the preset temperature requirement, determine the to-be-detected object is not the specified object.

From the above descriptions, it can be known that, because the radar detection signal is not easily susceptible to environmental factors, the distance information between the to-be-detected object and the camera device can be determined more accurately based on the radar detection signal, and further, the calibration size range can be determined more accurately based on the distance information. Therefore, the method of achieving object detection based on radar detection signal and image jointly in the present application will greatly improve the accuracy of the object detection.

### BRIEF DESCRIPTION OF THE DRAWINGS

FIG. 1 is a flowchart illustrating a method of detecting an object according to an exemplary embodiment of the present application.
FIG. 2 is a schematic diagram illustrating a camera device according to an exemplary embodiment of the present application.
FIG. 3 is a schematic diagram illustrating an integrated architecture of a radar module according to an exemplary embodiment of the present application.
FIG. 4a is a schematic diagram illustrating another camera device according to an exemplary embodiment of the present application.
FIG. 4b is a flowchart illustrating a method of detecting an object according to an exemplary embodiment of the present application.
FIG. 5a is a schematic diagram illustrating another camera device according to an exemplary embodiment of the present application.
FIG. 5b is a flowchart illustrating a method of detecting an object according to an exemplary embodiment of the present application.
FIG. 6 is a schematic diagram illustrating a monitoring image collected by a camera device.

### DETAILED DESCRIPTION OF THE EMBODIMENTS

Examples will be described in detail herein, with the illustrations thereof represented in the drawings. When the following descriptions involve the drawings, like numerals in different drawings refer to like or similar elements unless otherwise indicated. The embodiments described in the following examples do not represent all embodiments consistent with the present application. Rather, they are merely examples of apparatuses and methods consistent with some aspects of the present application as detailed in the appended claims.

The terms used in the present application are for the purpose of describing particular examples only, and are not intended to limit the present application. The terms "a", "the" and "said" in their singular forms in the present application and the appended claims are also intended to include plurality, unless clearly indicated otherwise in the context. It should also be understood that the term "and/or" as used herein refers to and includes any or all possible combinations of one or more of the associated listed items.

It is to be understood that, although the terms "first," "second," "third," and the like may be used in the present application to describe various information, such information should not be limited to these terms. These terms are only used to distinguish one category of information from another. For example, without departing from the scope of the present application, first information may be referred as second information; and similarly, the second information may also be referred as the first information. Depending on the context, the term "if" as used herein may be interpreted as "when" or "upon" or "in response to determining".

The present application aims to provide a method of detecting an object so as to accurately determine whether a to-be-detected object appearing in a monitoring region is a specified object.

During implementation, a camera device integrates a radar module and an image module. The radar module may send and receive a radar detection signal for detecting the to-be-detected object and the image module may collect an image containing the to-be-detected object. In this case, the camera device may, based on the radar detection signal for detecting the to-be-detected object, determine distance information of the to-be-detected object relative to the camera device and speed information of the to-be-detected object. If the speed information satisfies a preset speed requirement, the camera device may determine a calibration size range corresponding to the to-be-detected object based on the distance information, and determine an actual size of the to-be-detected object based on a collected image containing the to-be-detected object. The camera device determines whether the to-be-detected object is a specified object based on the actual size and the calibration size range.

Because the radar detection signal is not easily susceptible to environmental factors, the distance information between the to-be-detected object and the camera device can be determined more accurately based on the radar detection signal, and further, the calibration size range can be determined more accurately based on the distance information. Therefore, the method of achieving object detection based on radar detection signal and image jointly in the present application will greatly improve the accuracy of the object detection.

Before the method of detecting an object in the present application is described, the concepts involved in the present application are introduced.

### 1. Specified object

The specified object is an object to be monitored by a user as well as an object preset by the user. The specified object may be a person, a vehicle, an animal, etc. The specified object is not limited herein.

### 2. To-be-detected object

The to-be-detected object refers to a moving object appearing in a monitoring region. The to-be-detected object may be a person, a vehicle, an animal etc., which is not limited herein.

For example, in an embodiment of the present application, it is assumed that the specified object is a person. If a moving to-be-detected object appears in a monitoring region, it is to be detected whether the to-be-detected object is a person.

### 3. Size prediction model

In the present application, a size prediction model is pre-trained. The size prediction model may represent a correspondence between distance information between the to-be-detected object and the camera device and calibration sizes. The calibration size represents, when the to-be-detected object is the specified object, a size of the specified object in the image. In other words, it is the distance information between the to-be-detected object and the camera device that is input to the size prediction model and it is a calibration size corresponding to the to-be-detected object that is output by the size prediction model.

The construction process of the size prediction model is described below.

During implementation, at least one specified position is selected in a monitoring region.

For one specified position, a specified object is placed at the specified position.

Then, by sending a radar detection signal and receiving a reflected radar detection signal, the camera device determines the distance information of the specified object relative to the camera device. Further, the camera device collects an image of the specified object and determines a size of the specified object from the collected image as a calibration size. In this way, the camera device can obtain the distance information and the calibration size corresponding to the specified position.

Based on the above same manner, the camera device can obtain the distance information and the calibration size corresponding to each specified position.

Next, with the distance information corresponding to each specified position as independent variable and the calibration size corresponding to each specified position as dependent variable, an independent variable-dependent variable pair corresponding to each specified position is generated. Then, a size prediction model is obtained by fitting each independent variable-dependent variable pair (for example, fitting based on interpolation algorithm). The sizes of the specified object in the images collected for the specified object at a plurality of different positions having a same distance from the camera device are same.

The method of detecting an object according to the present application is detailed below.

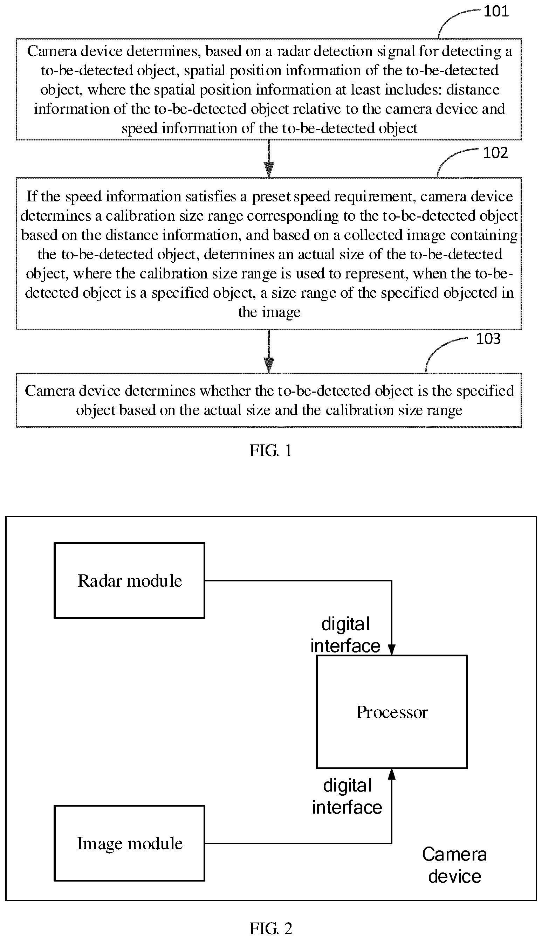

Please refer to FIG. 1, which is a flowchart illustrating a method of detecting an object according to an exemplary embodiment of the present application. The method may be applied to a camera device and may include the following steps.

At step 101, the camera device, based on a radar detection signal for detecting a to-be-detected object, determines spatial position information of the to-be-detected object, where the spatial position information at least includes: distance information of the to-be-detected object relative to the camera device and speed information of the to-be-detected object.

In an embodiment of the present application, the camera device may a multinocular/multi-eye camera device. One eye of the multi-eye camera device may be provided with a radar detector and another eye may be provided with a camera for image collection.

In operation, the camera device always sends the radar detection signal and also always performs image collection. When a moving to-be-detected object is present in a monitoring region, the camera device may receive, by the radar detector, a radar detection signal used for detecting the to-be-detected object and reflected by the to-be-detected object and collect an image containing the to-be-detected object by the camera.

The camera device may determine spatial position information of the to-be-detected object based on the radar detection signal.

The spatial position information may include: distance information of the to-be-detected object relative to the camera device, speed information of the to-be-detected object and the like. The spatial position information is only exemplified here and will not be specifically limited herein.

At step 102, if the speed information satisfies a preset speed requirement, a calibration size range corresponding to the to-be-detected object is determined based on the distance information, and an actual size of the to-be-detected object is determined based on a collected image containing the to-be-detected object, where the calibration size range is used to represent, when the to-be-detected object is a specified object, a size range of the specified objected in the image.

I n implementation, the camera device may detect whether the speed information of the to-be-detected object satisfies the preset speed requirement. For example, the speed requirement may be that the speed of the to-be-detected object is within a preset speed range of the specified object. In an embodiment, a preset speed range of a person is 5-19 km/h and a preset speed range of a vehicle is 20-60 km/h. For another example, the speed requirement may be that a difference between the speed of the to-be-detected object and the preset speed of the specified object is within a preset error range (for example, ±5%). The speed requirement is only exemplified here and will not be specifically limited herein.

If the speed information of the to-be-detected object does not satisfy the preset speed requirement, it is determined that the to-be-detected object is not the specified object.

If the speed information of the to-be-detected object satisfies the preset speed requirement, the calibration size range corresponding to the to-be-detected object is determined based on the distance information, and the actual size of the to-be-detected object is determined based on a collected image containing the to-be-detected object.

The manners in which the above two sizes are obtained are described in detail below. 1) Obtaining of the calibration size range of the to-be-detected object

In implementation, the camera device may input the distance information between the to-be-detected object and the camera device to the above preset size prediction model and obtain a calibration size of the to-be-detected object output by the size prediction model.

Then, the camera device may determine the calibration size range based on the calibration size and a preset size error. For example, the camera device may add up the calibration size and the preset size error to obtain the calibration size range. Of course, the camera device may also obtain the calibration size range in other manners. Thus, the obtaining manner herein is only illustrative and not specifically limited herein.

It is to be noted that, the calibration size range of the to-be-detected object means, when a specified object is placed at the position of a current to-be-detected object, that is, a distance between the specified object and the camera device is same as the distance between the to-be-detected object and the camera device, a size of the specified object in an image obtained by performing image collection by the camera device for the specified object at this position. In other words, it means, if the to-be-detected object is the specified object, the actual size of the specified object at the same position in the image.

### 2) Obtaining of the actual size of the to-be-detected object

In an embodiment, the camera device may, based on the distance between the to-be-detected object and the camera device, obtain the actual size of the to-be-detected object from the collected image.

The manner in which the actual size is obtained will be detailed below in steps A to B.

At step A, the camera device performs object recognition for an image and recognizes position and actual size of at least one object in the image.

For example, the camera device may input the image to a preset object recognition model which performs object recognition for the input image and outputs a region box of at least one object in the image. Next, for the region box of each recognized object, the camera device may determine a position of the region box in the image as position information of the object in the image, and determine a size range of the region box as the actual size of the object in the image.

The object recognition model may be a YOLO model or another model. The object recognition model herein is only illustrative and is not limited herein.

Of course, the camera device may also perform step A in another manner. This manner is only illustrative and not limited herein.

At step B, the camera device determines a to-be-detected object from at least one object recognized from the image and determines the actual size of the to-be-detected object in the image.

A correspondence between image position information and distance information is preconfigured in the camera device. In the correspondence relationship, the image position information refers to a position in an image, which is unique in the image. In the correspondence relationship, the distance information refers to a distance, relative to the camera device, of a position located in a monitoring region and corresponding to the image position. The image positions are in one-to-one correspondence with the positions in the monitoring region, and the distance between a position in the monitoring region and the camera device is unique. Based on this correspondence, the image position may be associated with a distance measured by a radar for a position in the monitoring region and corresponding to the image position.

During implementation of step B, based on the correspondence between image position information and distance information, the camera device may determine the distance between each recognized object and the camera device according to the image position of each object recognized from the image.

Next, the camera device may determine a distance same as the distance between the to-be-detected object and the camera device from the distances between the recognized objects and the camera device, and based on the determined distance, determine a corresponding image position in the image position- distance relationship of the recognized objects, and take an object at the obtained image position as a to-be-detected object. The camera device may take an actual size of the determined object in the image as the actual size of the to-be-detected object in the image. It should be noted that the same distance herein may be that the distance difference is within a preset range.

For example, the correspondence between image position information and distance information is as shown in Table 1.

**Table 1**

| Image position | Distance |
|---|---|
| Position 1 | Distance 1 |
| Position 2 | Distance 2 |
| Position 3 | Distance 3 |
| Position 4 | Distance 2 |
| Position 5 | Distance4 |
| Position 6 | Distance 5 |
| ... | ... |
| Position M | Distance N |

It is assumed that the distance between the to-be-detected object and the camera device is determined to be distance 1, and two objects, i.e. an object 1 and an object 2, are recognized from the image. The position of the recognized object 1 in the image is position 1, and the actual size in the image is size 1. The position of the recognized object 2 in the image is position 2, and the actual size in the image is size 2.

The camera device may obtain the distance values, i.e. the distance 1 and the distance 2, corresponding to the position 1 and the position 2 from the Table 1, compare the distance 1 and the distance 2 with the distance between the to-be-detected object and the camera device (i.e. distance 1) and determine the distance 1 corresponding to the position 1 is same as the distance between the to-be-detected object and the camera device. Then, since the position of the object 1 in the image is the position 1, the camera device determines the object 1 as the to-be-detected object and takes the actual size of the object 1 in the image as the actual size of the to-be-detected object in the image.

In some embodiments, two or more objects may have a same distance from the camera device. If the distance is same as the distance between the to-be-detected object and the camera device, the two or more objects are all determined as the to-be-detected objects.

At step 103, the camera device, based on the actual size and the calibration size range, determines whether the to-be-detected object is the specified object.

It is to be noted that the calibration size range refers to, assume the to-be-detected object is a specified object, a size range of the specified object at the same position in the image. The actual size refers to a true size of the to-be-detected object in the image. In the embodiments of the present application, the camera device firstly hypothesizes that the to-be-detected object is a specified object, and then based on the calibration size range and the actual size, verifies whether the hypothesis is established, so as to determine whether the to-be-detected object is the specified object.

In an optional implementation, the camera device may detect whether the actual size is within the calibration size range. If the actual size is within the calibration size range, it is determined that the to-be-detected object is the specified object. If the actual size is not within the calibration size range, it is determined that the to-be-detected object is not the specified object.

A thermal image can provide much information of an object, such as a size of the object in the image, a position of the object in the image, a current temperature of the image and the like. Thus, to improve the accuracy of the object detection, the above collected image may be a thermal image.

Furthermore, to further improve the accuracy of the object detection, interference of some small target objects (e.g. tree branches, rain and snow, etc.) can be eliminated in combination with the temperature information in the thermal image.

Thus, in another optional implementation, the camera device may, based on a collected thermal image containing the to-be-detected object, determine an actual size of the to-be-detected object in the image and based on the thermal image, determine a current temperature of the to-be-detected object.

If the actual size is within the calibration size range, and the current temperature information satisfies the preset temperature requirement, the camera device may determine the to-be-detected object is the specified object.

If the actual size is not within the calibration size range, and/or the current temperature information does not satisfy the preset temperature requirement, the camera device may determine the to-be-detected object is not the specified object.

In an embodiment, for a person, the preset temperature requirement is 35-38 degrees Celsius.

Furthermore, since a visible light image can provide much detail information of an image, it is favorable for evidence collection and confirmation. The image collected in the present application may be a thermal image or a visible light image, or a combination thereof.

In an optional implementation, the camera device may, based on a collected visible light image containing the to-be-detected object, determine the actual size of the to-be-detected object in the image.

If the actual size is within the calibration size range, the camera device may determine the to-be-detected object is the specified object; if the actual size is not within the calibration size range, the camera device may determine the to-be-detected object is not the specified object.

In another optional implementation, the camera device may, based on a collected thermal image containing the to-be-detected object, determine a first actual size of the to-be-detected object in the image, based on the thermal image, determine a current temperature of the to-be-detected object, and based on a collected visible light image containing the to-be-detected object, determine a second actual size of the to-be-detected object in the image.

If the first actual size and the second actual size both are within the calibration size range, and the current temperature information satisfies the preset temperature requirement, it is determined that the to-be-detected object is the specified object; if the first actual size is not within the calibration size range and/or the second actual size is not within the calibration size range, and/or the current temperature information does not satisfy the preset temperature requirement, it is determined that the to-be-detected object is not the specified object.

Furthermore, in an embodiment of the present application, to output an image showing more information, after detecting the to-be-detected object is a specified object, the camera device may further fuse the thermal image and the visible light image both containing the to-be-detected object and output a fused image. Of course, the camera device may alternatively output a visible light image or a thermal image or the like, which is not limited herein.

Since the fused image contains the detail information of the visible light image and the temperature information of the thermal image, the fused image can contain more information, facilitating subsequent image processing.

From the above description, it can be seen that, in a first aspect, because the radar detection signal is not easily susceptible to the environmental factors, the distance information between the to-be-detected object and the camera device can be determined more accurately based on the radar detection signal, and further, the calibration size range can be determined more accurately based on the distance information. Therefore, the method of achieving object detection based on radar detection signal and image jointly in the present application will greatly improve the accuracy of the object detection.

In a second aspect, the speed information and the size of the to-be-detected object are incorporated, leading to a higher accuracy of the object detection.

In a third aspect, in some embodiments, the temperature information in the thermal image is further incorporated in object detection, such that the interference of small target objects (e.g. tree branches and the like) to the object detection can be reduced during the object detection, leading to a higher accuracy of the object detection.

In a fourth aspect, in some embodiments, object detection is performed with further incorporation of a visible light image, leading to a higher accuracy of the object detection.

When the spatial position information of a plurality of to-be-detected objects is determined by using the radar detection signal, object detection can be carried out by the method mentioned above. Details thereof may refer to the specific steps mentioned above. No redundant descriptions are repeated herein.

Furthermore, the present application further provides a camera device.

Please refer to FIG. 2, which is a schematic diagram illustrating a camera device according to an exemplary embodiment of the present application. The camera device includes a radar module, an image module and a processor.

In a practical application, the camera device may further include other modules, for example, a communication module or the like. Herein, the modules integrated in the camera device are only illustrative and not limited specifically.

The radar module is connected with the processor via a digital interface, and the image module is connected with the processor via a digital interface.

### 1) Radar module

The radar module may adopt an integrated module solution or a discrete module solution.

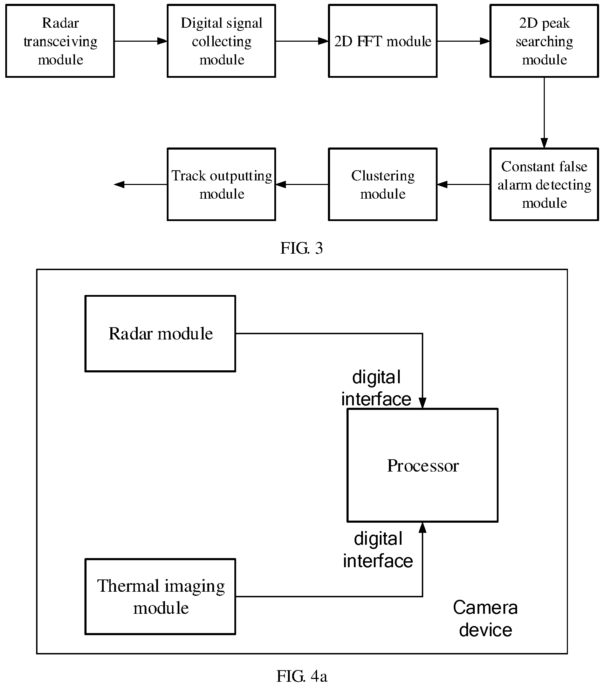

Please refer to FIG. 3, which is a schematic diagram illustrating an integrated architecture of a radar module according to an exemplary embodiment of the present application.

**As** shown in FIG. 3, the radar module includes: a radar transceiving module (e.g. the radar transceiving module includes a radar detector, an antenna, etc.) configured to send a radar detection signal and receive a reflected radar detection signal. A digital signal collecting module is configured to, based on the radar detection signal sent and reflected back, perform digital signal collection. Two-dimensional fast Fourier transform (2D FFT) module performs two-dimensional fast Fourier transform for the collected digital signal. Next, a two-dimensional peak searching module performs two-dimensional peak searching processing for the transformed signal. Next, a constant false alarm detecting module performs constant false alarm detection for a result output by the two-dimensional peak searching module. A clustering module performs clustering for the constant false alarm detection result. A track outputting module determines the spatial position information of the to-be-detected object based on a clustering result. The spatial position information of the to-be-detected object may include: a distance between the to-be-detected object and the camera device, a speed of the to-be-detected object, etc. The spatial position information herein is only illustrative and is not limited specifically.

In the integrated module solution, the modules shown in FIG. 3 may be integrated into the radar module. The radar module can directly output the spatial position information of the to-be-detected object.

In the discrete module solution, some of the modules shown in FIG. 3 may be deployed in the radar module and others are deployed in the processor of the camera device.

For example, the radar transceiving module is deployed in the radar module and other modules are deployed in the processor. The radar module sends a radar detection signal and relevant information to the processor, and the processor determines the spatial position information of the to-be-detected object from the radar detection signal by using other modules.

The radar module herein is only illustrative and is not limited specifically.

### 2) Image module

The image module may include a thermal imaging module, or a visible light module, or the thermal imaging module and the visible light module.

In an optional implementation, the camera device includes a radar module, a thermal imaging module and a processor.

In another optional implementation, the camera device includes a radar module, a thermal imaging module, a visible light module and a processor.

In another optional implementation, the camera device includes a radar module, a visible light module and a processor.

Thermal imaging module includes a thermal imaging lens, a processing chip, etc. The thermal imaging module herein is not limited. The thermal imaging module is configured to collect a thermal image of a to-be-detected object in a monitoring region.

The visible light module includes a visible light lens, a processing chip, etc. The visible light module herein is not limited. The visible light module is configured to collect a visible light image of a to-be-detected object in a monitoring region.

### 3) Processor

The processor is configured to perform object detection. The processor may be a logic processing chip configured with a system-on-a-chip (SOC) which is to achieve object detection.

In an embodiment of the present application, the radar module is configured to send a radar detection signal for detecting a to-be-detected object and receive a reflected radar detection signal.

The image module is configured to collect an image containing the to-be-detected object.

The processor is configured to: obtain spatial position information of the to-be-detected object; where the spatial position information is determined based on the radar detection signal for detecting the to-be-detected object, and the spatial position information at least includes: distance information of the to-be-detected object relative to the camera device and speed information of the to-be-detected object; in response to that the speed information satisfies a preset speed requirement, based on the distance information, determine a calibration size range of the to-be-detected object, and obtain an actual size of the to-be-detected object in the image, where the actual size is determined based on the collected image containing the to-be-detected object; based on the actual size and the calibration size range, determine whether the to-be-detected object is a specified object; where the calibration size range is used to represent, when the to-be-detected object is the specified object, a size range of the specified objected at the same position in the image.

The functions of the processor are specifically described below in steps 201 to 203.

At step 201, the processor obtains the spatial position information of the to-be-detected object; where the spatial position information is determined based on the radar detection signal for detecting the to-be-detected object, and the spatial position information at least includes: the distance information of the to-be-detected object relative to the camera device and the speed information of the to-be-detected object.

In an optional implementation, the radar module determines the spatial position information of the to-be-detected object based on the radar detection signal and sends the spatial position information to the processor. The processor may receive the spatial position information.

In another optional implementation, the radar module sends the radar detection signal and information relating to the radar detection signal (e.g. a sending time and a receiving time of the radar detection signal) to the processor, and the processor, based on the radar detection signal and the information relating to the radar detection signal, determines the spatial position information of the to-be-detected object, which is not specifically limited herein.

Furthermore, the specific implementation can be referred to step 101 and will not be repeated herein.

At step 202, if the speed information satisfies a preset speed requirement, the processor, based on the distance information, determines a calibration size range of the to-be-detected object, and obtains an actual size of the to-be-detected object in the image; where the actual size is determined based on a collected image containing the to-be-detected object.

During implementation, the processor may detect whether the speed information of the to-be-detected object satisfies the preset speed requirement. For example, the speed requirement may be that the speed of the to-be-detected object is within a preset speed range of the specified object. For another example, the speed requirement may be that a difference between the speed of the to-be-detected object and the preset speed of the specified object is within a preset error range. The speed requirement herein is only illustrative and not limited specifically herein.

If the speed information of the to-be-detected object does not satisfy the preset speed requirement, it is determined that the to-be-detected object is not the specified object.

If the speed information of the to-be-detected object satisfies the preset speed requirement, the calibration size range corresponding to the to-be-detected object is determined based on the distance information, and based on a collected image containing the to-be-detected object, the actual size of the to-be-detected object in the image is determined.

The manners in which the above two sizes are obtained are described in detail below. 1) Obtaining of the calibration size range of the to-be-detected object

During implementation, the processor may input the distance information between the to-be-detected object and the camera device to the above preset size prediction model and obtain a calibration size of the to-be-detected object output by the size prediction model.

Then, the processor may, based on the calibration size and a preset size error, determine the calibration size range. For example, the processor may add up the calibration size and the preset size error to obtain the calibration size range. Of course, the processor may alternatively obtain the calibration size range in another manner. The obtaining manner is only illustrative and is not limited specifically herein.

It is to be noted that, the calibration size range of the to-be-detected object means, when a specified object is placed at the position of a current to-be-detected object, a size of the specified object in an image, obtained by performing image collection by the image module for the specified object at the position. In other words, it means, if the to-be-detected object is the specified object, the actual size of the specified object at the same position in the image.

### 2) Obtaining of the actual size of the to-be-detected object

In an optional manner of determining the actual size, the image module may perform recognition on a collected image to obtain image position information and actual sizes of a plurality of recognized objects in the image and send the image position information and the actual sizes of the plurality of recognized objects in the image to the processor. The processor may determine the distance corresponding to the image position of each object based on the above correspondence between image position information and distance information. Next, the processor determine a distance same as the distance between the to-be-detected object and the camera device from the determined distances, and based on the determined distance, determine an image position in the image position - distance correspondence of the recognized objects, and take an object at the determined image position as a to-be-detected object and take an actual size of the determined object in the image as the actual size of the to-be-detected object in the image.

In an optional manner of determining the actual size, the image module may send a collected image to the processor. The processor performs recognition for the collected image to obtain image position information and actual sizes of a plurality of recognized objects in the image, and based on the above correspondence between image positions and distances, determines a distance corresponding to the image position of each object. Next, the processor may determine a distance same as the distance between the to-be-detected object and the camera device from the determined distances, and based on the determined distance, determine an image position in the image position - distance correspondence of the recognized objects, take an object at the determined image position as a to-be-detected object and take an actual size of the determined object in the image as the actual size of the to-be-detected object in the image.

For specific information, reference may be made to the descriptions of step 102 and no redundant descriptions will be made.

At step 203, the processor, based on the actual size and the calibration size range, determines whether the to-be-detected object is the specified object.

Optionally, the processor, when determining the calibration size range of the to-be-detected object based on the distance information, is configured to: input the distance information to a preset size prediction model to obtain a corresponding calibration size; and based on the calibration size and a preset size error, determine the calibration size range.

Optionally, the processor, when determining whether the to-be-detected object is the specified object based on the actual size and the calibration size range, is configured to, if the actual size is within the calibration size range, determine the to-be-detected object is the specified object; if the actual size is not within the calibration size range, determine the to-be-detected object is not the specified object.

Optionally, the image module is a visible light module, and the image is a visible light image.

Optionally, the image module is a thermal imaging module and the image is a thermal image.

Optionally, the processor is further configured to obtain current temperature information of the to-be-detected object, where the current temperature information is determined based on the thermal image.

The processor, when determining whether the to-be-detected object is the specified object based on the actual size and the calibration size range, is configured to, if the actual size is within the calibration size range and the current temperature information satisfies a preset temperature requirement, determine the to-be-detected object is the specified object; if the actual size is not within the calibration size range, and/or the current temperature information does not satisfy the preset temperature requirement, determine the to-be-detected object is not the specified object.

It is to be noted that, when obtaining the current temperature information of the to-be-detected object, in an optional implementation, the thermal imaging module may determine the current temperature information of the to-be-detected object from the thermal image, and send the current temperature information to the processor. Of course, in another optional implementation, the thermal imaging module may send the thermal image to the processor which determines the current temperature information of the to-be-detected object from the thermal image. The obtaining manner is only illustrative and not limited specifically herein.

Optionally, the image module includes a thermal imaging module and a visible light module, and the image includes a thermal image and a visible light image; the processor, when obtaining the actual size of the to-be-detected object, is configured to obtain a first actual size of the to-be-detected object in the image and a second actual size of the to-be-detected object in the image; where the first actual size is determined based on the thermal image and the second actual size is determined based on the visible light image.

The processor is further configured to determine current temperature information of the to-be-detected object based on the thermal image.

The processor, when determining whether the to-be-detected object is the specified object based on the actual size and the calibration size range, is configured to, if the first actual size and the second actual size both are within the calibration size range and the current temperature information satisfies the preset temperature requirement, determine the to-be-detected object is the specified object; if the first actual size is not within the calibration size range, and/or the second actual size is not within the calibration size range, and/or the current temperature information does not satisfy the preset temperature requirement, determine the to-be-detected object is not the specified object.

It is to be noted that, when obtaining the first actual size and the current temperature information of the to-be-detected object, in an optional implementation, the thermal imaging module may determine the current temperature information of the to-be-detected object from the thermal image as well as the first actual size in the image, and send the current temperature information and the first actual size in the image to the processor. Of course, in another optional implementation, the thermal imaging module may send the thermal image to the processor which determines the current temperature information of the to-be-detected object from the thermal image as well as the first actual size in the image. The obtaining manner is only illustrative and not limited specifically herein.

When obtaining the second actual size of the to-be-detected object, in an optional implementation, the visible light module may determine, from the visible light image, the second actual size of the to-be-detected object in the image, and send the second actual size to the processor. Of course, in another optional implementation, the visible light module may send the visible light image to the processor which determines, from the visible light image, the second actual size of the to-be-detected object in the image. The obtaining manner is only illustrative and not limited specifically herein.

From the above description, it can be seen that, in a first aspect, because the radar detection signal is not easily susceptible to the environmental factors, the distance between the to-be-detected object and the camera device can be determined more accurately based on the radar detection signal, and further, the calibration size range can be determined more accurately based on the distance information. Therefore, the method of achieving object detection based on radar detection signal and image jointly in the present application will greatly improve the accuracy of the object detection.

In a second aspect, the speed information and the size information of the to-be-detected object are incorporated in object detection, leading to a higher accuracy of the object detection.

In a third aspect, in some embodiments, the temperature information in the thermal image is further incorporated in object detection, such that the interference of small target objects (e.g. tree branches and the like) to the object detection can be reduced during the object detection, leading to a higher accuracy of the object detection.

In a fourth aspect, in some embodiments, object detection is performed further based on the actual size of the to-be-detected object in the thermal image and the visible light image, leading to a higher accuracy of the object detection.

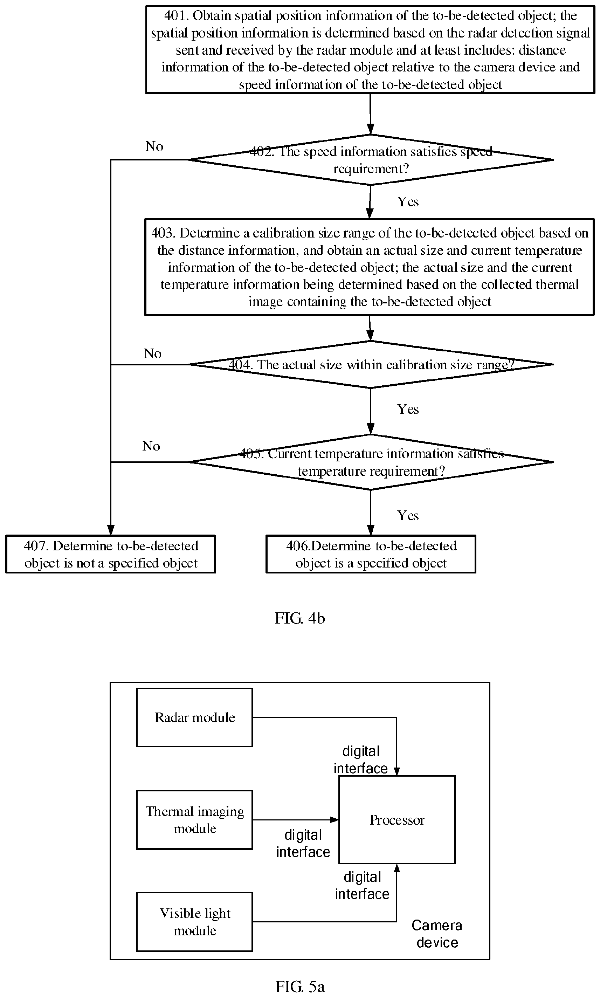

Refer to FIG. 4b, which is a flowchart illustrating a method of detecting an object according to an exemplary embodiment of the present application.

The method may be applied to a camera device. As shown in FIG. 4a, the camera device may include a radar module, a thermal imaging module, and a processor. The radar module and the thermal imaging module are connected with the processor via a digital interface, respectively. The method may include the following steps.

When a to-be-detected object appears in a monitoring region, the radar module may receive a radar detection signal used for detecting the to-be-detected object and reflected by the to-be-detected object and the thermal imaging module may collect a thermal image containing the to-be-detected object.

At step 401, the processor obtains spatial position information of the to-be-detected object; the spatial position information is determined based on the radar detection signal sent and received by the radar module, and the spatial position information at least includes: distance information of the to-be-detected object relative to the camera device and speed information of the to-be-detected object.

At step 402, the processor detects whether the speed information satisfies a speed requirement.

If the speed information satisfies the speed requirement, step 403 is performed; if the speed information does not satisfy the speed requirement, step 407 is performed.

At step 403, the processor determines a calibration size range of the to-be-detected object based on the distance information, and obtains an actual size of the to-be-detected object in the image and current temperature information of the to-be-detected object; the actual size and the current temperature information are determined based on the collected thermal image containing the to-be-detected object.

At step 404, the processor detects whether the actual size is within the calibration size range.

If the actual size is within the calibration size range, step 405 is performed; if the actual size is not within the calibration size range, step 407 is performed.

At step 405, the processor detects whether the current temperature information satisfies a temperature requirement.

If the current temperature information satisfies the temperature requirement, step 406 is performed; if the current temperature information does not satisfy the temperature requirement, step 407 is performed.

At step 406, the processor determines the to-be-detected object is the specified object.

At step 407, the processor determines the to-be-detected object is not the specified object.

It is noted that reference may be made to the above descriptions for the specific implementation of steps 401 to 407 and no redundant descriptions are made herein.

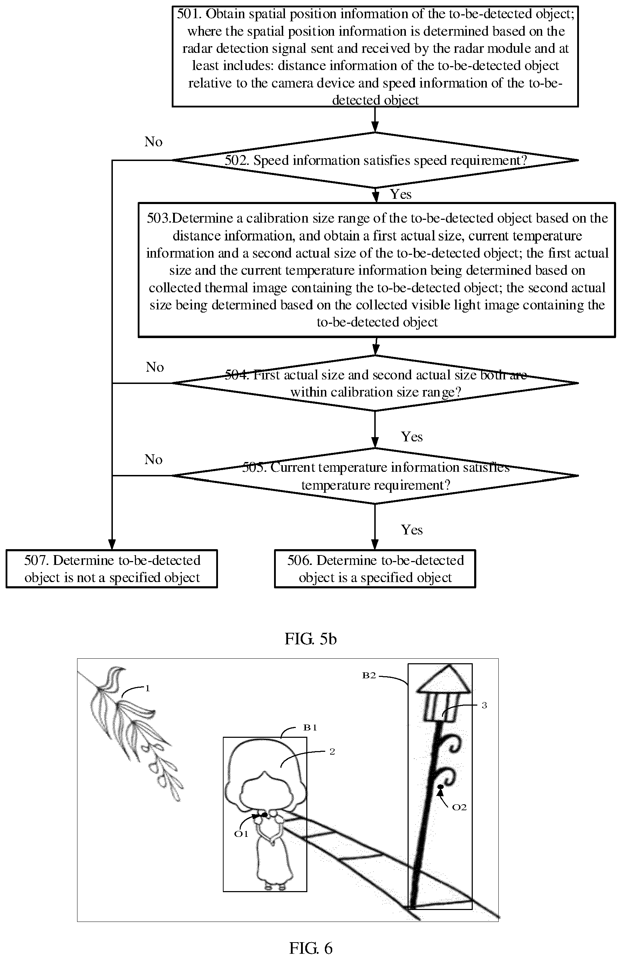

Refer to FIG. 5b, which is a flowchart illustrating a method of detecting an object according to an exemplary embodiment of the present application.

The method may be applied to a camera device. As shown in FIG. 5a, the camera device may include a radar module, a thermal imaging module, a visible light module and a processor. The radar module, the thermal imaging module and the visible light module are connected with the processor via a digital interface, respectively. The method may include the following steps.

When a to-be-detected object appears in a monitoring region, the radar module may receive a radar detection signal used for detecting the to-be-detected object and reflected by the to-be-detected object, and the thermal imaging module and the visible light module may collect a thermal image and a visible light image containing the to-be-detected object, respectively.

At step 501, the processor obtains spatial position information of the to-be-detected object; where the spatial position information is determined based on the radar detection signal sent and received by the radar module, and the spatial position information at least includes: distance information of the to-be-detected object relative to the camera device and speed information of the to-be-detected object.

At step 502, the processor detects whether the speed information satisfies a speed requirement.

If the speed information satisfies the speed requirement, step 503 is performed; if the speed information does not satisfy the speed requirement, step 507 is performed.

At step 503, the processor determines a calibration size range of the to-be-detected object based on the distance information, and obtains a first actual size of the to-be-detected object in the image, current temperature information of the to-be-detected object and a second actual size of the to-be-detected object in the image; where the first actual size and the current temperature information are determined based on the collected thermal image containing the to-be-detected object; and the second actual size is determined based on the collected visible light image containing the to-be-detected object.

At step 504, the processor detects whether the first actual size and the second actual size are within the calibration size range.

If the first actual size and the second actual size are within the calibration size range, step 505 is performed; if the first actual size is not within the calibration size range and/or the second actual size is not within the calibration size range, step 507 is performed.

At step 505, the processor detects whether the current temperature information satisfies a temperature requirement.

If the current temperature information satisfies the temperature requirement, step 506 is performed; if the current temperature information does not satisfy the temperature requirement, step 507 is performed.

At step 506, the processor determines the to-be-detected object is the specified object.

At step 507, the processor determines the to-be-detected object is not the specified object.

It is noted that reference may be made to the above descriptions for the specific implementation of steps 501 to 507 and no redundant descriptions are made herein.

The implementation process of the functions and effects of the units in the above apparatus can be referred to the implementation process of the corresponding steps in the above method and no redundant descriptions are made herein.

Since the apparatus embodiments substantially correspond to the method embodiments, a reference may be made to part of the descriptions of the method embodiments for the related part. The apparatus embodiments described above are merely illustrative, where the units described as separate members may be or not be physically separated, and the members displayed as units may be or not be physical units, i.e., may be located in one place, or may be distributed to a plurality of network units. Part or all of the modules may be selected according to actual requirements to implement the objectives of the solutions in the embodiments. Those of ordinary skill in the art may understand and carry out them without creative work.

One or more embodiments of the present application will be described below in combination with a specific application scenario.

A camera device used for household security protection is often used to monitor whether a stranger appears. In this case, the specified object is person. For a person, a preset speed requirement is, for example, 1.3m/s to 2.7m/s.

A size prediction model is prestored in the camera device to represent a correspondence between distances from person to camera device and calibration sizes . In an example, when a camera device is mounted, an installation person walks in a monitoring scope, and the camera device collects distance information of several points and, in combination with video images, establishes and stores the correspondence between distances from person to camera device and calibration sizes. In some other embodiments, the manufacturer may establish the correspondence between distances from person to camera device and calibration sizes and prestore it in the camera device.

The camera device always collects images of the monitoring region. Therefore, the camera device can collect an image containing a moving object. As shown in FIG. 6, it shows a schematic diagram illustrating an image collected by a camera device. In this drawing, an object 1 (tree branch) swings along with wind and an object 2 (person) moves toward the camera device.

The camera device also always sends a radar detection signal. When a moving object (swinging tree branch and person moving toward the camera device) is present in the monitoring region, the camera device may receive a radar detection signal reflected by the to-be-detected object. Based on the sent and received radar detection signal, the camera device may determine a distance between the object and the camera device and a speed of the object. For example, the distance between the object 1 and the camera device is 4.2m, and the movement speed of the object 1 is 5.0m/s; the distance between the object 2 and the camera device is 3.7m and the movement speed of the object 2 is 1.6m/s. Next, the camera device compares the speeds of the objects with a preset speed requirement to determine: the speed of the object 1 does not satisfy the preset speed requirement, and thus the object 1 is not the specified object; and the speed of the object 2 satisfies the preset speed requirement. At this time, the camera device, based on the radar detection signal, determines that there exists a to-be-detected object for which further determination whether the object is a specified object is to be made. Then, the camera device inputs the distance 3.7m associated with the speed value 1.6m/s to the size prediction model to obtain a corresponding calibration size 33mm. With a preset size error being ±5mm, a calibration size range is obtained as 28mm to 38mm.

The camera device inputs the image to a preset object recognition model which recognizes the object 2 and the object 3 from the image and determines region boxes B1 and B2 of the object 2 and the object 3. The camera device takes an intersection point position of diagonal lines of the region boxes as the position of the objects in the image and takes a height of the region boxes as an actual size of the objects in the image. In this case, the position of the object 2 is O1 (579, 328), the actual size in the image is 32mm; the position of the object 3 is O2 (1105, 413), and the actual size in the image is 51mm.

A correspondence between image positions and distances is preconfigured in the camera device. Based on the positions O1 and O2, the corresponding distances 3.6m and 2.5m can be obtained. Then, the camera device compares the two above distance values with the distance 3.7m to the to-be-detected object and determines O1 complies with requirements, and thus the object 2 corresponding to the position O1 is determined as a to-be-detected object, and the actual size 32mm of the object 2 in the image is determined as an actual size of the to-be-detected object in the image.

Next, the camera device compares the actual size 32mm with the calibration size range 28mm to 38mm and determines the actual size is within the calibration size range and thus determines the to-be-detected object is the specified object, that is, the object 2 is person.

## Claims

1. A method of detecting an object, being applied to a camera device and comprising:
based on a radar detection signal for detecting a to-be-detected object and a reflected radar detection signal, determining (101, 404, 501) spatial position information of the to-be-detected object, wherein the spatial position information at least comprises: distance information of the to-be-detected object relative to the camera device and speed information of the to-be-detected object;
in response to that the speed information satisfies a preset speed requirement, based on the distance information, determining (102) a calibration size range corresponding to the to-be-detected object, and based on a collected image containing the to-be-detected object, determining an actual size of the to-be-detected object in the image, wherein the calibration size range is used to represent, when the to-be-detected object is a specified object, a size range of the specified objected in the image;
based on the actual size and the calibration size range, determining (103) whether the to-be-detected object is the specified object, **characterized in that**
wherein, based on the distance information, determining the calibration size range corresponding to the to-be-detected object comprises:
inputting the distance information to a preset size prediction model to obtain a corresponding calibration size, wherein the size prediction model is pre-stored in the camera device and represents a correspondence between distance information from the to-be-detected object to the camera device and calibration sizes;
based on the calibration size and a preset size error, determining the calibration size range.

2. The method of claim 1, wherein based on the actual size and the calibration size range, determining whether the to-be-detected object is the specified object comprises:
in response to that the actual size is within the calibration size range, determining the to-be-detected object is the specified object;
in response to that the actual size is not within the calibration size range, determining the to-be-detected object is not the specified object.

3. The method of any one of claims 1 to 2, wherein the image is a thermal image.

4. The method of claim 3, wherein the method further comprises: based on the thermal image, determining current temperature information of the to-be-detected object;
based on the actual size and the calibration size range, determining whether the to-be-detected object is the specified object comprises:
in response to that the actual size is within the calibration size range and the current temperature information satisfies a preset temperature requirement, determining (406) the to-be-detected object is the specified object;
in response to that the actual size is not within the calibration size range and/or the current temperature information does not satisfy the preset temperature requirement, determining (407) the to-be-detected object is not the specified object.

5. The method of any one of claims 1 to 2, wherein the image is a visible light image.

6. The method of any one of claims 1 to 2, wherein the image comprises a thermal image and a visible light image;
based on the collected image containing the to-be-detected object, determining the actual size of the to-be-detected object in the image comprises:
determining a first actual size of the to-be-detected object from the thermal image;
determining a second actual size of the to-be-detected object from the visible light image;
the method further comprises: based on the thermal image, determining current temperature information of the to-be-detected object;
based on the actual size and the calibration size range, determining whether the to-be-detected object is the specified object comprises:
in response to that the first actual size and the second actual size both are within the calibration size range, and the current temperature information satisfies a preset temperature requirement, determining (506) the to-be-detected object is the specified object;
in response to that the first actual size is not within the calibration size range, and/or the second actual size is not within the calibration size range, and/or the current temperature information does not satisfy the preset temperature requirement, determining (507) the to-be-detected object is not the specified object.

7. A camera device, comprising:
a radar module, configured to send a radar detection signal for detecting a to-be-detected objet and receive a reflected radar detection signal;
an image module, configured to collect an image containing the to-be-detected object;
a processor, configured to obtain (101, 404, 501) spatial position information of the to-be-detected object; wherein the spatial position information is determined based on the radar detection signal for detecting the to-be-detected object and the reflected radar detection signal, and the spatial position information at least comprises: distance information of the to-be-detected object relative to the camera device and speed information of the to-be-detected object; in response to that the speed information satisfies a preset speed requirement, based on the distance information, determine (102) a calibration size range of the to-be-detected object, and obtain an actual size of the to-be-detected object in the image, wherein the actual size is determined based on the collected image containing the to-be-detected object; and based on the actual size and the calibration size range, determine (103) whether the to-be-detected object is a specified object;
wherein the calibration size range is used to represent, when the to-be-detected object is the specified object, a size range of the specified objected in the image, **characterized in that** wherein the processor, when determining the calibration size range corresponding to the to-be-detected object based on the distance information, is configured to input the distance information to a preset size prediction model to obtain a corresponding calibration size; and based on the calibration size and a preset size error, determine the calibration size range;
wherein the size prediction model is pre-stored in the camera device and represents a correspondence between distance information from the to-be-detected object to the camera device and calibration sizes.

8. The device of claim 7, wherein the processor, when determining whether the to-be-detected object is the specified object based on the actual size and the calibration size range, is configured to, in response to that the actual size is within the calibration size range, determine the to-be-detected object is the specified object; in response to that the actual size is not within the calibration size range, determine the to-be-detected object is not the specified object.

9. The device of any one of claims 7 to 8, wherein the image module is a thermal imaging module, and the image is a thermal image.

10. The device of claim 9, wherein the processor is further configured to obtain current temperature information of the to-be-detected object; where the current temperature information is determined based on the thermal image;
the processor, when determining whether the to-be-detected object is the specified object based on the actual size and the calibration size range, is configured to, in response to that the actual size is within the calibration size range and the current temperature information satisfies a preset temperature requirement, determine (406) the to-be-detected object is the specified object; in response to that the actual size is not within the calibration size range, and/or the current temperature information does not satisfy the preset temperature requirement, determine (407) the to-be-detected object is not the specified object.

11. The device of any one of claims 7 to 8, wherein the image module is a visible light module, and the image is a visible light image.

12. The device of any one of claims 7 to 8, wherein the image module comprises a thermal imaging module and a visible light module;
the image comprises a thermal image and a visible light image;
the processor, when obtaining the actual size of the to-be-detected object in the image, is configured to obtain a first actual size of the to-be-detected object and a second actual size of the to-be-detected object; where the first actual size is determined based on the thermal image; and the second actual size is determined based on the visible light image;
the processor is further configured to determine current temperature information of the to-be-detected object based on the thermal image;
the processor, when determining whether the to-be-detected object is the specified object based on the actual size and the calibration size range, is configured to, in response to that the first actual size and the second actual size both are within the calibration size range and the current temperature information satisfies a preset temperature requirement, determine (506) the to-be-detected object is the specified object; in response to that the first actual size is not within the calibration size range, and/or the second actual size is not within the calibration size range, and/or the current temperature information does not satisfy the preset temperature requirement, determine (507) the to-be-detected object is not the specified object.

## Patentansprüche

1. Verfahren zum Erkennen eines Objekts, das auf eine Kameravorrichtung angewendet wird und Folgendes umfasst:
Bestimmen (101, 404, 501) von räumlichen Positionsinformationen des zu erfassenden Objekts basierend auf einem Radarerfassungssignal zum Erfassen eines zu erfassenden Objekts und einem reflektierten Radarerfassungssignal, wobei die räumlichen Positionsinformationen mindestens umfassen: Abstandsinformation des zu erfassenden Objekts relativ zu der Kameravorrichtung und Geschwindigkeitsinformation des zu erfassenden Objekts;
Bestimmen (102) eines Kalibrierungsgrößenbereichs, der dem zu erfassenden Objekt entspricht in Reaktion darauf, dass die Geschwindigkeitsinformation eine voreingestellte Geschwindigkeitsanforderung erfüllt, auf der Grundlage der Abstandsinformation, und Bestimmen einer tatsächlichen Größe des zu erfassenden Objekts in dem Bild auf der Grundlage eines gesammelten Bildes, das das zu erfassende Objekt enthält, wobei der Kalibrierungsgrößenbereich verwendet wird, um, wenn das zu erfassende Objekt ein spezifiziertes Objekt ist, einen Größenbereich des spezifizierten Objekts in dem Bild darzustellen;
Bestimmen (103), ob das zu detektierende Objekt das spezifizierte Objekt ist, basierend auf der tatsächlichen Größe und dem Kalibrierungsgrößenbereich, **dadurch gekennzeichnet, dass**
wobei das Bestimmen des Kalibrierungsgrößenbereichs, der dem zu erfassenden Objekt entspricht, auf der Grundlage der Abstandsinformation umfasst:
Eingeben der Abstandsinformation in ein voreingestelltes Größenvorhersagemodell, um eine entsprechende Kalibrierungsgröße zu erhalten, wobei das Größenvorhersagemodell in der Kameravorrichtung vorgespeichert ist und eine Übereinstimmung zwischen Abstandsinformation von dem zu erfassenden Objekt zu der Kameravorrichtung und Kalibrierungsgrößen darstellt;
Bestimmung des Kalibrierungsgrößenbereichs auf der Grundlage der Kalibrierungsgröße und eines voreingestellten Größenfehlers.

2. Verfahren nach Anspruch 1, wobei auf der Grundlage der tatsächlichen Größe und des Kalibrierungsgrößenbereichs bestimmt wird, ob das zu erfassende Objekt das spezifizierte Objekt ist, umfassend:
als Reaktion darauf, dass die tatsächliche Größe innerhalb des Kalibrierungsgrößenbereichs liegt, Bestimmen, dass das zu erfassende Objekt das angegebene Objekt ist;
als Reaktion darauf, dass die tatsächliche Größe nicht innerhalb des Kalibrierungsgrößenbereichs liegt, Bestimmen, dass das zu erfassende Objekt nicht das angegebene Objekt ist.

3. Das Verfahren nach einem der Ansprüche 1 bis 2, wobei das Bild ein Wärmebild ist.

4. Verfahren nach Anspruch 3, wobei das Verfahren ferner umfasst: Bestimmen der aktuellen Temperaturinformation des zu erfassenden Objekts auf der Grundlage des Wärmebildes;
auf der Grundlage der tatsächlichen Größe und des Kalibrierungsgrößenbereichs, Bestimmen, ob das zu erfassende Objekt das spezifizierte Objekt ist, umfasst:
als Reaktion darauf, dass die tatsächliche Größe innerhalb des Kalibrierungsgrößenbereichs liegt und die aktuelle Temperaturinformation eine voreingestellte Temperaturanforderung erfüllt, Bestimmen (406), dass das zu erfassende Objekt das spezifizierte Objekt ist;
als Reaktion darauf, dass die tatsächliche Größe nicht innerhalb des Kalibrierungsgrößenbereichs liegt und/oder die aktuelle Temperaturinformation nicht die voreingestellte Temperaturanforderung erfüllt, Bestimmen (407), dass das zu erkennende Objekt nicht das spezifizierte Objekt ist.

5. Verfahren nach einem der Ansprüche 1 bis 2, wobei das Bild ein Bild mit sichtbarem Licht ist.

6. Verfahren nach einem der Ansprüche 1 bis 2, wobei das Bild ein Wärmebild und ein Bild mit sichtbarem Licht umfasst;
auf der Grundlage des gesammelten Bildes, das das zu erfassende Objekt enthält, die tatsächliche Größe des zu erfassenden Objekts in dem Bild zu bestimmen, umfasst:
Bestimmen einer ersten tatsächlichen Größe des zu erfassenden Objekts aus dem Wärmebild;
Bestimmen einer zweiten tatsächlichen Größe des zu erfassenden Objekts aus dem Bild mit sichtbarem Licht;
das Verfahren umfasst ferner: Bestimmen der aktuellen Temperaturinformation des zu erfassenden Objekts auf der Grundlage des Wärmebildes;
auf der Grundlage der tatsächlichen Größe und des Kalibrierungsgrößenbereichs, Bestimmen, ob das zu erfassende Objekt das spezifizierte Objekt ist, umfasst:
als Reaktion darauf, dass die erste tatsächliche Größe und die zweite tatsächliche Größe beide innerhalb des Kalibrierungsgrößenbereichs liegen und die aktuelle Temperaturinformation eine voreingestellte Temperaturanforderung erfüllt, Bestimmen (506), dass das zu erfassende Objekt das spezifizierte Objekt ist;
als Reaktion darauf, dass die erste tatsächliche Größe nicht innerhalb des Kalibrierungsgrößenbereichs liegt, und/oder die zweite tatsächliche Größe nicht innerhalb des Kalibrierungsgrößenbereichs liegt, und/oder die aktuelle Temperaturinformation nicht die voreingestellte Temperaturanforderung erfüllt, Bestimmen (507), dass das zu erkennende Objekt nicht das spezifizierte Objekt ist.

7. Eine Kameravorrichtung, umfassend:
ein Radarmodul, das so konfiguriert ist, dass es ein Radarerfassungssignal zur Erfassung eines zu erfassenden Objekts sendet und ein reflektiertes Radarerfassungssignal empfängt;
ein Bildmodul, das so konfiguriert ist, dass es ein Bild erfasst, das das zu erfassende Objekt enthält;
einen Prozessor, der so konfiguriert ist, dass er räumliche Positionsinformationen des zu erfassenden Objekts erhält (101, 404, 501); wobei die räumlichen Positionsinformationen auf der Grundlage des Radarerfassungssignals zum Erfassen des zu erfassenden Objekts und des reflektierten Radarerfassungssignals bestimmt werden und die räumlichen Positionsinformationen zumindest Folgendes umfassen: Abstandsinformation des zu erfassenden Objekts relativ zu der Kameravorrichtung und Geschwindigkeitsinformation des zu erfassenden Objekts; in Reaktion darauf, dass die Geschwindigkeitsinformation eine voreingestellte Geschwindigkeitsanforderung erfüllt, basierend auf der Abstandsinformation, Bestimmen (102) eines Kalibrierungsgrößenbereichs des zu erfassenden Objekts, und Erhalten einer tatsächlichen Größe des zu erfassenden Objekts in dem Bild, wobei die tatsächliche Größe basierend auf dem gesammelten Bild, das das zu erfassende Objekt enthält, bestimmt wird; und auf der Grundlage der tatsächlichen Größe und des Kalibrierungsgrößenbereichs zu bestimmen (103), ob das zu erfassende Objekt ein spezifiziertes Objekt ist;
wobei der Kalibrierungsgrößenbereich verwendet wird, um, wenn das zu erfassende Objekt das spezifizierte Objekt ist, einen Größenbereich des spezifizierten Objekts in dem Bild darzustellen, **dadurch gekennzeichnet, dass**
wobei der Prozessor, wenn er den Kalibrierungsgrößenbereich, der dem zu erkennenden Objekt entspricht, auf der Grundlage der Abstandsinformation bestimmt, so konfiguriert ist, dass er die Abstandsinformation in ein Modell zur Vorhersage der voreingestellten Größe eingibt, um eine entsprechende Kalibrierungsgröße zu erhalten; und auf der Grundlage der Kalibrierungsgröße und eines Fehlers der voreingestellten Größe den Kalibrierungsgrößenbereich bestimmt;
wobei das Größenvorhersagemodell in der Kameravorrichtung vorgespeichert ist und eine Übereinstimmung zwischen Abstandsinformation von dem zu erfassenden Objekt zu der Kameravorrichtung und Kalibrierungsgrößen darstellt.

8. Vorrichtung nach Anspruch 7, wobei der Prozessor bei der Bestimmung, ob das zu detektierende Objekt das spezifizierte Objekt ist, basierend auf der tatsächlichen Größe und dem Kalibrierungsgrößenbereich, so konfiguriert ist, dass er in Reaktion darauf, dass die tatsächliche Größe innerhalb des Kalibrierungsgrößenbereichs liegt, bestimmt, dass das zu detektierende Objekt das spezifizierte Objekt ist; in Reaktion darauf, dass die tatsächliche Größe nicht innerhalb des Kalibrierungsgrößenbereichs liegt, bestimmt, dass das zu detektierende Objekt nicht das spezifizierte Objekt ist.

9. Die Vorrichtung nach einem der Ansprüche 7 bis 8, wobei das Bildmodul ein Wärmebildmodul ist und das Bild ein Wärmebild ist.

10. Vorrichtung nach Anspruch 9, wobei der Prozessor ferner so konfiguriert ist, dass er aktuelle Temperaturinformation des zu erfassenden Objekts erhält, wobei die aktuelle Temperaturinformation auf der Grundlage des Wärmebildes bestimmt wird;
der Prozessor, wenn er bestimmt, ob das zu detektierende Objekt das spezifizierte Objekt ist, basierend auf der tatsächlichen Größe und dem Kalibrierungsgrößenbereich, konfiguriert ist, um in Reaktion darauf, dass die tatsächliche Größe innerhalb des Kalibrierungsgrößenbereichs liegt und die aktuelle Temperaturinformation eine voreingestellte Temperaturanforderung erfüllen, zu bestimmen (406), dass das zu detektierende Objekt das spezifizierte Objekt ist; in Reaktion darauf, dass die tatsächliche Größe nicht innerhalb des Kalibrierungsgrößenbereichs liegt und/oder die aktuelle Temperaturinformation die voreingestellte Temperaturanforderung nicht erfüllen, zu bestimmen (407), dass das zu detektierende Objekt nicht das spezifizierte Objekt ist.

11. Vorrichtung nach einem der Ansprüche 7 bis 8, wobei das Bildmodul ein Modul für sichtbares Licht ist und das Bild ein Bild für sichtbares Licht ist.

12. Die Vorrichtung nach einem der Ansprüche 7 bis 8, wobei das Bildmodul ein Wärmebildmodul und ein Modul für sichtbares Licht umfasst;
das Bild besteht aus einem Wärmebild und einem Bild mit sichtbarem Licht;
der Prozessor, wenn er die tatsächliche Größe des zu detektierenden Objekts in dem Bild erhält, so konfiguriert ist, dass er eine erste tatsächliche Größe des zu detektierenden Objekts und eine zweite tatsächliche Größe des zu detektierenden Objekts erhält, wobei die erste tatsächliche Größe auf der Grundlage des Wärmebildes bestimmt wird und die zweite tatsächliche Größe auf der Grundlage des Bildes mit sichtbarem Licht bestimmt wird;
der Prozessor ist ferner so konfiguriert, dass er aktuelle Temperaturinformation des zu erfassenden Objekts auf der Grundlage des Wärmebildes bestimmt;
der Prozessor, wenn er bestimmt, ob das zu detektierende Objekt das spezifizierte Objekt ist, basierend auf der tatsächlichen Größe und dem Kalibrierungsgrößenbereich, ist konfiguriert, um in Reaktion darauf, dass die erste tatsächliche Größe und die zweite tatsächliche Größe beide innerhalb des Kalibrierungsgrößenbereichs liegen und die aktuelle Temperaturinformation eine voreingestellte Temperaturanforderung erfüllt, zu bestimmen (506), dass das zu detektierende Objekt das spezifizierte Objekt ist; als Reaktion darauf, dass die erste tatsächliche Größe nicht innerhalb des Kalibrierungsgrößenbereichs liegt und/oder die zweite tatsächliche Größe nicht innerhalb des Kalibrierungsgrößenbereichs liegt und/oder die aktuelle Temperaturinformation nicht die voreingestellte Temperaturanforderung erfüllt, Bestimmen (507), dass das zu detektierende Objekt nicht das spezifizierte Objekt ist.

## Revendications

1. Procédé de détection d'un objet, appliqué à un dispositif caméra et comprenant :
sur la base d'un signal de détection radar pour la détection d'un objet à détecter et d'un signal de détection radar réfléchi, la détermination (101, 404, 501) d'informations de position spatiale de l'objet à détecter, les informations de position spatiale comprenant au moins : des informations de distance de l'objet à détecter par rapport au dispositif caméra et des informations de vitesse de l'objet à détecter ;
dans le cas où les informations de vitesse répondent à une exigence de vitesse prédéfinie, sur la base des informations de distance, la détermination (102) d'une plage de tailles de calibrage correspondant à l'objet à détecter et, sur la base d'une image capturée contenant l'objet à détecter, la détermination d'une taille réelle de l'objet à détecter dans l'image, la plage de tailles de calibrage étant utilisée pour représenter, lorsque l'objet à détecter est un objet désigné, une plage de tailles de l'objet désigné dans l'image ;
sur la base de la taille réelle et de la plage de tailles de calibrage, la détermination (103) si l'objet à détecter est ou non l'objet désigné, **caractérisé en ce que**
sur la base des informations de distance, la détermination de la plage de tailles de calibrage correspondant à l'objet à détecter comprend :
l'introduction des informations de distance dans un modèle de prédiction de taille prédéfini pour obtenir une taille de calibrage correspondante, le modèle de prédiction de taille étant préenregistré dans le dispositif caméra et représentant une correspondance entre des informations de distance de l'objet à détecter au dispositif caméra et des tailles de calibrage ;
sur la base de la taille de calibrage et d'une erreur de taille prédéfinie, la détermination de la plage de tailles de calibrage.

2. Procédé selon la revendication 1, dans lequel, sur la base de la taille réelle et de la plage de tailles de calibrage, la détermination si l'objet à détecter est ou non l'objet désigné comprend :
dans le cas où la taille réelle s'inscrit dans la plage de tailles de calibrage, la détermination que l'objet à détecter est l'objet désigné ;
dans le cas où la taille réelle sort de la plage de tailles de calibrage, la détermination que l'objet à détecter n'est pas l'objet désigné.

3. Procédé selon l'une quelconque des revendications 1 à 2, dans lequel l'image est une image thermique.

4. Procédé selon la revendication 3, le procédé comprenant en outre : sur la base de l'image thermique, la détermination d'informations de température actuelle de l'objet à détecter ;
sur la base de la taille réelle et de la plage de tailles de calibrage, la détermination si l'objet à détecter est ou non l'objet désigné comprenant :
dans le cas où la taille réelle s'inscrit dans la plage de tailles de calibrage et les informations de température actuelle répondent à une exigence de température prédéfinie, la détermination (406) que l'objet à détecter est l'objet désigné ;
dans le cas où la taille réelle sort de la plage de tailles de calibrage et/ou les informations de température actuelle ne répondent pas à l'exigence de température prédéfinie, la détermination (407) que l'objet à détecter n'est pas l'objet désigné.

5. Procédé selon l'une quelconque des revendications 1 à 2, dans lequel l'image est une image en lumière visible.

6. Procédé selon l'une quelconque des revendications 1 à 2, dans lequel l'image comprend une image thermique et une image en lumière visible ;
sur la base de l'image capturée contenant l'objet à détecter, la détermination de la taille réelle de l'objet à détecter dans l'image comprend :
la détermination d'une première taille réelle de l'objet à détecter à partir de l'image thermique ;
la détermination d'une deuxième taille réelle de l'objet à détecter à partir de l'image en lumière visible ;
le procédé comprenant en outre : sur la base de l'image thermique, la détermination d'informations de température actuelle de l'objet à détecter ;
sur la base de la taille réelle et de la plage de tailles de calibrage, la détermination si l'objet à détecter est ou non l'objet désigné comprenant :
dans le cas où la première taille réelle et la deuxième taille réelle s'inscrivent toutes deux dans la plage de tailles de calibrage et les informations de température actuelle répondent à une exigence de température prédéfinie, la détermination (506) que l'objet à détecter est l'objet désigné ;
dans le cas où la première taille réelle sort de la plage de tailles de calibrage et/ou la deuxième taille réelle sort de la plage de tailles de calibrage et/ou les informations de température actuelle ne répondent pas à l'exigence de température prédéfinie, la détermination (507) que l'objet à détecter n'est pas l'objet désigné.

7. Dispositif caméra, comprenant :
un module radar, configuré pour envoyer un signal de détection radar pour la détection d'un objet à détecter et recevoir un signal de détection radar réfléchi ;
un module d'image, configuré pour capturer une image contenant l'objet à détecter ;
un processeur, configuré pour obtenir (101, 404, 501) des informations de position spatiale de l'objet à détecter ; les informations de position spatiale étant déterminées sur la base du signal de détection radar pour la détection de l'objet à détecter et du signal de détection radar réfléchi, et les informations de position spatiale comprenant au moins : des informations de distance de l'objet à détecter par rapport au dispositif caméra et des informations de vitesse de l'objet à détecter ; dans le cas où les informations de vitesse répondent à une exigence de vitesse prédéfinie, sur la base des informations de distance, déterminer (102) une plage de tailles de calibrage correspondant à l'objet à détecter, et obtenir une taille réelle de l'objet à détecter dans l'image, la taille réelle étant déterminée sur la base de l'image capturée contenant l'objet à détecter ; et, sur la base de la taille réelle et de la plage de tailles de calibrage, déterminer (103) si l'objet à détecter est ou non l'objet désigné ;
la plage de tailles de calibrage étant utilisée pour représenter, lorsque l'objet à détecter est l'objet désigné, une plage de tailles de l'objet désigné dans l'image, **caractérisé en ce que**
le processeur, lorsqu'il détermine la plage de tailles de calibrage correspondant à l'objet à détecter sur la base des informations de distance, est configuré pour introduire les informations de distance dans un modèle de prédiction de taille prédéfini pour obtenir une taille de calibrage correspondante ; et, sur la base de la taille de calibrage et d'une erreur de taille prédéfinie, déterminer la plage de tailles de calibrage ;
le modèle de prédiction de taille étant préenregistré dans le dispositif caméra et représentant une correspondance entre des informations de distance de l'objet à détecter au dispositif caméra et des tailles de calibrage.

8. Dispositif selon la revendication 7, dans lequel le processeur, lorsqu'il détermine si l'objet à détecter est ou non l'objet désigné sur la base de la taille réelle et de la plage de tailles de calibrage, est configuré pour, dans le cas où la taille réelle s'inscrit dans la plage de tailles de calibrage, déterminer que l'objet à détecter est l'objet désigné ; dans le cas où la taille réelle sort de la plage de tailles de calibrage, déterminer que l'objet à détecter n'est pas l'objet désigné.

9. Dispositif selon l'une quelconque des revendications 7 à 8, dans lequel le module d'image est un module d'image thermique, et l'image est une image thermique.

10. Dispositif selon la revendication 9, dans lequel le processeur est configuré en outre pour obtenir des informations de température actuelle de l'objet à détecter ; les informations de température actuelle étant déterminées sur la base de l'image thermique ;
le processeur, lorsqu'il détermine si l'objet à détecter est ou non l'objet désigné sur la base de la taille réelle et la plage de tailles de calibrage, est configuré pour, dans le cas où la taille réelle s'inscrit dans la plage de tailles de calibrage et les informations de température actuelle répondent à une exigence de température prédéfinie, déterminer (406) que l'objet à détecter est l'objet désigné ; dans le cas où la taille réelle sort de la plage de tailles de calibrage et/ou les informations de température actuelle ne répondent pas à l'exigence de température prédéfinie, déterminer (407) que l'objet à détecter n'est pas l'objet désigné.

11. Dispositif selon l'une quelconque des revendications 7 à 8, dans lequel le module d'image est un module d'image en lumière visible, et l'image est une image en lumière visible.

12. Dispositif selon l'une quelconque des revendications 7 à 8, dans lequel le module d'image comprend un module d'image thermique et un module d'image en lumière visible ;
l'image comprend une image thermique et une image en lumière visible ;
le processeur, lorsqu'il obtient la taille réelle de l'objet à détecter dans l'image, est configuré pour obtenir une première taille réelle de l'objet à détecter et une deuxième taille réelle de l'objet à détecter ; la première taille réelle étant déterminée sur la base de l'image thermique ; et la deuxième taille réelle étant déterminée sur la base de l'image en lumière visible ;
le processeur est configuré en outre pour déterminer des informations de température actuelle de l'objet à détecter sur la base de l'image thermique ;
le processeur, lorsqu'il détermine si l'objet à détecter est ou non l'objet désigné sur la base de la taille réelle et la plage de tailles de calibrage, est configuré pour, dans le cas où la première taille réelle et la deuxième taille réelle s'inscrivent toutes deux dans la plage de tailles de calibrage et les informations de température actuelle répondent à une exigence de température prédéfinie, déterminer (506) que l'objet à détecter est l'objet désigné ; dans le cas où la première taille réelle sort de la plage de tailles de calibrage et/ou la deuxième taille réelle sort de la plage de tailles de calibrage et/ou les informations de température actuelle ne répondent pas à l'exigence de température prédéfinie, déterminer (507) que l'objet à détecter n'est pas l'objet désigné.
